Europäisches Patentamt

European Patent Office

Office européen des brevets

(11) Veröffentlichungsnummer : **0 389 505 B1**

(12) **EUROPÄISCHE PATENTSCHRIFT**

(45) Veröffentlichungstag der Patentschrift :
**15.07.92 Patentblatt 92/29**

(21) Anmeldenummer : **88909315.9**

(22) Anmeldetag : **26.10.88**

(86) Internationale Anmeldenummer :
**PCT/EP88/00959**

(87) Internationale Veröffentlichungsnummer :
**WO 89/04205 18.05.89 Gazette 89/11**

(51) Int. Cl.⁵ : **B01D 53/00,** B01J 19/00,
B01J 19/14, F16K 15/03

(54) **ABLUFTENTSORGUNGSANLAGE FÜR KLEBSTOFFANLAGEN.**

(30) Priorität : **02.11.87 DE 3737106**
**03.05.88 DE 3814945**

(43) Veröffentlichungstag der Anmeldung :
**03.10.90 Patentblatt 90/40**

(45) Bekanntmachung des Hinweises auf die
Patenterteilung :
**15.07.92 Patentblatt 92/29**

(84) Benannte Vertragsstaaten :
**DE**

(56) Entgegenhaltungen :
**FR-A- 2 163 029**

(73) Patentinhaber : **Henkel**
**Kommanditgesellschaft auf Aktien**
**Postfach 1100 Henkelstrasse 67**
**W-4000 Düsseldorf 1 (DE)**

(72) Erfinder : **GEHRMANN, Arno**
**Backeskamp 41**
**W-4030 Ratingen 8 (DE)**

(74) Vertreter : **Patentanwälte Meinke und**
**Dabringhaus Dipl.-Ing. J. Meinke Dipl.-Ing. W.**
**Dabringhaus**
**Westenhellweg 67**
**W-4600 Dortmund 1 (DE)**

Jouve, 18, rue Saint-Denis, 75001 PARIS

## Beschreibung

Die Erfindung richtet sich auf eine Abluftentsorgungsanlage für Klebstoffanlagen mit mehreren Klebstoffproduktionsbehältern, deren Gasräume kontinuierlich mit einem Inertgas beaufschlagt sind, und die Verwendung einer solchen Anlage zur Abluftentsorgung von Klebstoffbehältern.

Derartige Abluftentsorgungsanlagen für Klebstoffanlagen und dergl. sind bekannt. Dabei werden die Klebstoffproduktionsbehälter kontinuierlich mit Inertgas beaufschlagt, so daß während der Produktion entstehende Abluft nicht mit Luftsauerstoff in Kontakt geraten kann, was sonst zu explosiven Gemischen in den Behältern führen könnte. Die jeweils zugeführte Inertgasmenge wird den entsprechenden Betriebszuständen angepaßt und die Überschußmenge zusammen mit dem stark verdünnten Abluftabgasstrom an die Atmosphäre abgegeben, was einen großen Inertgasverbrauch bedingt. Diese Abgade an die Atmosphäre ist aufgrund neuer gesetzlicher Bestimmungen aber nicht, mehr zulässig, so daß die Abgase vor der Abgabe in die Atmosphäre aufgearbeitet werden müssen.

Diese Aufarbeitung ist aber besonders schwierig, da während des Produktionsvorganges unterschiedlichste Mengen an Abluftabgasströmen verschiedenster Zusammensetzung, z.B. mit Staub oder Tröpfchen beladen, auftreten können, was durch Befüll- und Entleervorgänge der Klebstoffbehälter, z.B. durch Einschütten von Feststoffen oder Flüssigkeiten bzw. durch Entnahme des flüssigen Klebstoffproduktes, hervorgerufen werden kann. Aus Sicherheitsgründen muß bei diesen Befüll- und Entleervorgängen jederzeit gewährleistet sein, daß in den Klebstoffbehältern ein nahezu konstanter Druck anliegt, damit einerseits beim Öffnen der Behälter keine giftige Abluft austreten bzw. andererseits keine Luft in den Behälter eingesaugt werden kann, was dann zu explosiven Gemischen im Behälter führen könnte. Derartige Schwankungen der Abluft-Abgasströme machen sich aber nur durch geringste Druckschwankungen bemerkbar, die mit üblichen Druckregeleinrichtungen nicht erfaßt werden können.

Aufgabe der Erfindung ist die Schaffung einer Lösung, mit welcher die Entsorgung der Abluft auch bei geringsten Druckschwankungen der vorgeschilderten Art mit einfachen Mitteln einwandfrei gewährleistet ist, wobei außerdem der Verbrauch an Inertgas möglichst gering gehalten werden soll.

Diese Aufgabe wird mit einer Abluft-Entsorgungsanlage der eingangs beschriebenen Art erfindungsgemäß dadurch gelöst, daß zur Abführung des Abluft-Inertgas-Volumenstroms aus den Gasräumen aller Klebstoffbehälter in eine Abluft-Aufarbeitung eine Abluftsammelleitung mit Druckregeleinrichtung vorgesehen ist, wobei jenseits der Druckregeleinrichtung eine in die Abluftsammelleitung mündende Falschluftleitung zur Ansaugung eines Falschluft-Volumenstroms angeschlossen und jenseits der Einmündung der Falschluftleitung ein Gebläse in der Abluftsammelleitung angeordnet ist, wobei die Druckregeleinrichtung als Pendelrückschlagvorrichtung ausgebildet ist, bei welcher in einem ringförmigen Gehäuse mittels an diesem befestigter Lagerspitzen exzentrisch oberhalb der Mittelachse eine Klappe drehbar gelagert ist, wobei die Lagerspitzen in entsprechend konische Bohrungen am Umfangsrand der Klappe eingreifen und entsprechend der exzentrischen Anordnung der Drehachse der Klappe versetzt ausgebildete ringsegmentförmige Anschläge zur Öffnung der Klappe nur in einer Richtung mit entsprechenden beidseitigen Eindrehungen des ringförmigen Gehäuses angeordnet sind und wobei unterhalb der Drehachse an der Klappe ein justierbares gegengewicht vorgesehen ist.

Mit einer derartigen Anlage wird auf einfache Weise die Abluftentsorgung von Klebstoffanlagen ermöglicht. Dabei wird im ungestörten Betrieb, d.h. ohne Befüll- bzw. Entleervorgänge der Klebstoffbehälter, ein konstanter Abluft-Inertgas-Volumenstrom aus den Klebstoffbehältern abgesaugt und der Abluft-Aufarbeitung zugeführt, so daß keine unnötigen Verlüste an Inertgas auftreten. Der konstante Absaugestrom wird durch die Kombination des Gebläses, der Falschluftansaugung und der erfindungsgemäß ausgestalteten Pendelrückschlagvorrichtung bewirkt, wobei aufgrund der besonders leichtgängigen Klappenlagerung der Pendelrückschlagvorrichtung bereits ein minimaler Druckunterschied an der Pendelrückschlagvorrichtung ausreicht, um die Klappe bei einem bestimmten Volumenstrom in einer durch das Gegengewicht einstellbaren Öffnungsstellung zu halten. Treten nun Störvorgänge auf, wie Befüllen oder Entleeren der Klebstoffbehälter, so werden durch die Pendelrückschlagvorrichtung die dabei auftretenden minimalen Druckänderungen, welche aber bereits zu einem unkontrollierten Austreten der Abluft in die Anlagengebäude bzw. Einsaugen von Luft in die Behälter führen können, innerhalb von Sekundenbruchteilen ausgeglichen. Dabei reagiert die erfindungsgemäße Pendelrückschlagvorrichtung überraschenderweise bereits auf minimale Druckschwankungen, auf die übliche Regelungen nicht ansprechen können. Eine mögliche Erklärung dafür wird darin gesehen, daß derartige Druckschwankungen und damit verbundene Volumenstromschwankungen aufgrund von Pulsationsvorgängen der Klappe der Vorrichtung und daraus resultierenden Druckstößen abgebaut werden.

Nach einer besonders bevorzugten Ausführungsform der Erfindung ist vorgesehen, daß die Abluft-Aufarbeitung zur Verbrennung des Abluft-Intergasstroms als Thermoreaktor aus gebildet ist. Ein solcher Thermoreaktor ist besonders energiesparend, da er gleichzeitig zur Erwärmung der kalten Abluft vor der Verbrennung geeignet ist. Selbstverständlich sind aber auch andere Abgasaufarbeitungen möglich.

Zur Lösung der Aufgabe wird erfindungsgemäß auch eine Verwendung der Anlage zur Abluftentsorgung von Klebstoffbehältern vorgeschlagen, bei der mittels der Pendelrückschlagvorrichtung in den Gasräumen der Klebstoffbehälter ein weitgehend konstanter Überdruck von 0,1 bis 0,2 mbar eingestellt wird, während mittels des gegenüber dem Abluft-Inertgas-Volumenstrom wesentlich größeren Falschluft-Volumenstroms und des Gebläses ein konstanter Unterdruck von 3 bis 4 mbar in der Abluftsammelleitung jenseits der Pendelrückschlagvorrichtung erzeugt wird.

Durch diese Ausbildung kann die Entsorgung der Abluft auch bei geringsten Druckschwankungen mit einfachen Mitteln einwandfrei gewährleistet werden.

Es ist besonders zwerkmäßig, wenn in den Gasräumen der Klebstoffbehälter ein weitgehend konstanter Überdruck von 0,1 mbar und im Bereich der Abluftsammelleitung jenseits der Pendelrückschlagvorrichtung ein Unterdruck von 3,5 mbar eingestellt wird. Dieser sehr geringe Überdruck in den Gasräumen der Klebstoffbehälter reicht aus, um bei Entleervorgängen ein Ansaugen von Umgebungsluft in die Behälter zu vermeiden. Andererseits ist dieser Druck so gering, daß beim Öffnen der Behälter keine Abgase in die Umgebung austreten können. Der das Absaugen des Abgases bewirkende Unterdrurk von 3,5 mbar hat sich in Verbindung mit der Pendelrückschlagvorrichtung als besonders günstig herausgestellt, da bei diesem Unterdruck die zugeführte Inertgasmenge zusammen mit den verdampften Abgasen kontinuierlich ohne Druckschwankungen aus den Behältern abgezogen werden kann, so daß nur kleinste Inertgasverluste auftreten.

Bei diesen Druckverhältnissen ist vorgesehen, daß der Abluft-Inertgas-Volumenstrom durch die Pendelrückschlagvorrichtung, der durch die kontinuierliche Inertgaszufuhr in die Klebstoffbehälter und die verdampfte Abgasmenge entsteht, im Bereich von 5 bis 10, insbesondere 7 m³/h liegt, und daß der durch Befüllvorgänge der Klebstoffbehälter verursachte zusätzliche Abluft-Inertgas-Volumenstrom bis zu 10 m³/h beträgt. Bei diesen Volumenströmen arbeitet die Anlage mit der entsprechend eingestellten Pendelrückschlagvorrichtung einwandfrei. Soll die Anlage mit größeren Volumenströmen betrieben werden, so ist eine entsprechende Dimensionierung der Pendelrückschlagvorrichtung notwendig und möglich.

Die Erfindung sieht auch vor, daß der Falschluft-Volumenstrom wenigstens zweimal größer als der Abluft-Inertgas-Volumenstrom ist. Bei diesen Volumenstromverhältnissen und entsprechend regulierter Gebläseleistung ist eine einwandfreie Funktion der Pendelrückschlagvorrichtung gewährleistet, derart, daß an der Vorrichtung stromabwärts nur geringe Unterdrücke auftreten können, die das regelverhalten der Pendelrückschlagvorrichtung nicht beeinträchtigen.

Schließlich ist vorgesehen, daß als Inertgas Stickstoff gewählt wird. Stickstoff ist wegen seiner besonders trägen Reaktionseigenschaften und der leichten Verfügbarkeit besonders geeignet.

Die Erfindung ist nachstehend anhand der Zeichnung beispielsweise näher erläutert. Diese zeigt in:

Fig. 1 in schematischer Darstellung eine Anlage gemäß der Erfindung

Fig. 2 eine detaillierte Seitenansicht einer in der Anlage nach Fig. 1 verwendeten Pendelrückschlagvorrichtung teilweise im Schnitt Wiedergegeben und in

Fig. 3 einen Schnitt längs der Linie III - III der Fig. 2.

Eine Klebstoffanlage mit Abluftentsorgungsanlage weist drei Klebstoffproduktionsbehälter 1 auf. Die Behälter 1 sind in der Figur unterschiedlich mit einer flüssigen Klebstofflösung befüllt dargestellt, was durch die Füllhöhen 2 angedeutet ist. Oberhalb der flüssigen Klebstofflösung in den Behälter 1 befinden sich Gasräume 3. Am Fuß der Behälter 1 ist jeweils ein Austritt 4 mit Absperrventil 5 angeordnet, wodurch fertiges Klebstoffprodukt entnommen werden kann, was durch Pfeile 6 angedeutet ist.

Am Kopf jedes Klebstoffbehälters 1 ist eine verschließbare Öffnung 7 zur Befüllung der Behälter mit Feststoffen, was durch einen Befüllbehälter 8 angedeutet ist, sowie je eine Zuführleitung 9 für flüssiges Ausgangsprodukt angeordnet. Weiterhin ist am Kopf der Behälter 1 eine Inertgaszuführleitung 10 mit Absperrventil 11 und Durchflußmeßgerät 12 vorgesehen, wobei die Inertgaszufuhr, auf die es hier nicht näher ankommt, lediglich durch Pfeile 13 dargestellt ist. Außerdem ist am Kopf der Klebstoffbehälter 1 noch jeweils eine Abluftleitung 14 mit Absperrventil 15 und Flammendurchschlagsicherung 16 angeordnet.

Die frei Abluftleitungen 14 münden in eine gemeinsame Abluftsammelleitung 17, in die eine als Druckregeleinrichtung dienende Pendelrückschlagvorrichtung 18 eingesetzt ist. Jenseits der Pendelrückschlagvorrichtung 18 ist in der Abluftsammelleitung 17 ein Ventil 19 angeordnet. Eine Falschluftleitung 20 mit Saugkorb 21 mündet jenseits des Ventils 19 in die sich erweiternde Abluftsammelleitung 17. Jenseits der Einmündung ist in der Sammelleitung 17 ein weiteres Ventil 22 angeordnet und die Sammelleitung an ein. in der figur nur durch einen Pfeil 23 angedeutetes Gebläse angeschlossen.

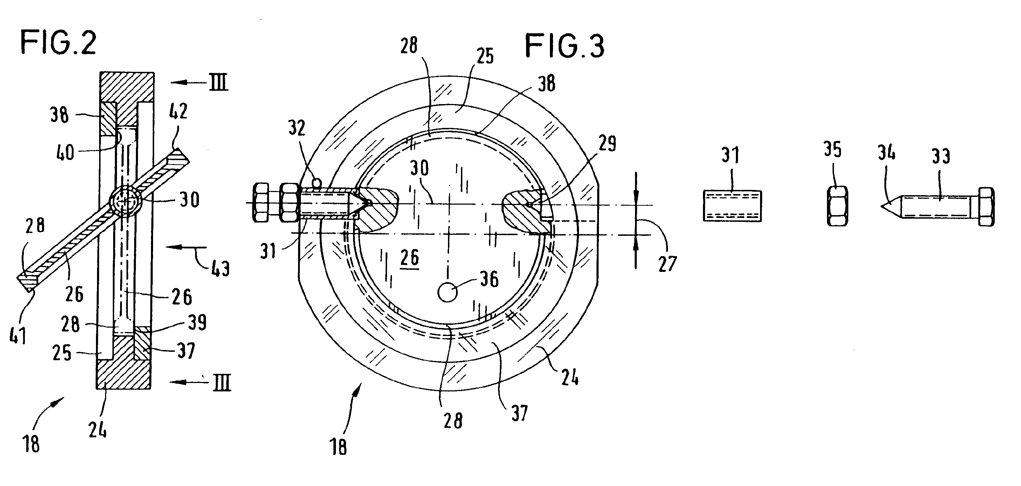

Die in die Abluftsammelleitung 17 eingesetzte Pendelrückschlagvorrichtung 18 ist in den Fig. 2 und 3 näher dargestellt. Die Pendelrückschlagvorrichtung 18 weist ein ringförmiges Gehäuse 24 auf, dis mit beidseitigen Eindrehungen 25 ausgebildet ist. Im Gehäuse 24 ist eine Klappe 26 exzentrisch drehbar gelagert, wobei das Maß der Exzentrizität gegenüber dem Mittelpunkt des zylindrischen Gehäuses 24 und der keisförmigen Klappe 26 mit 27 genkennzeichnet ist.

Zur drehbaren Lagerung der Klappe 26 sind in einem verdickten Umfangsrand 28 der Klappe 26 konische Bohrungen 29 ausgebildet, und zwar derart, daß sie auf einer gemeinsamen, eine horizontale Drehachse 30 bildenden Geraden liegen. Im Gehäuse 24 sind ebenfalls sich in Richtung der Drehachse 30 erstreckende Bohrungen ausgebildet, in die jeweils eine Gewindebuchse 21 einsetzbar und mittels Paßstift 32 festlegbar ist. In die Gewindebuchsen 31 wird dann jeweils eine Schraube 33 mit den konischen Bohrungen 29 entsprechenden konischen Lagerspitzen 34 eingeschraubt und mittels Kontermutter 35 in richtiger Stellung festgelegt. Im unteren Bereich der Klappe 24 ist ein nicht näher dargestelltes justierbares Gegengewicht 36 angeordnet.

In den Eindrehungen 25 des Gehäuseringes 24 sind ringsegmentförmige Anschläge 37 und 38 angeordnet, derart, daß versetzt zur Mittelebene der Klappe 26 liegende Anschlagdichtflächen 39 und 40 für entsprechende ebene Dichtflächen 41 und 42 am verdickten Umfangsrand 28 der Klappe 26 gebildet sind, wenn die Vorrichtung 18 in Richtung des Pfeiles 43 durchströmt soll.

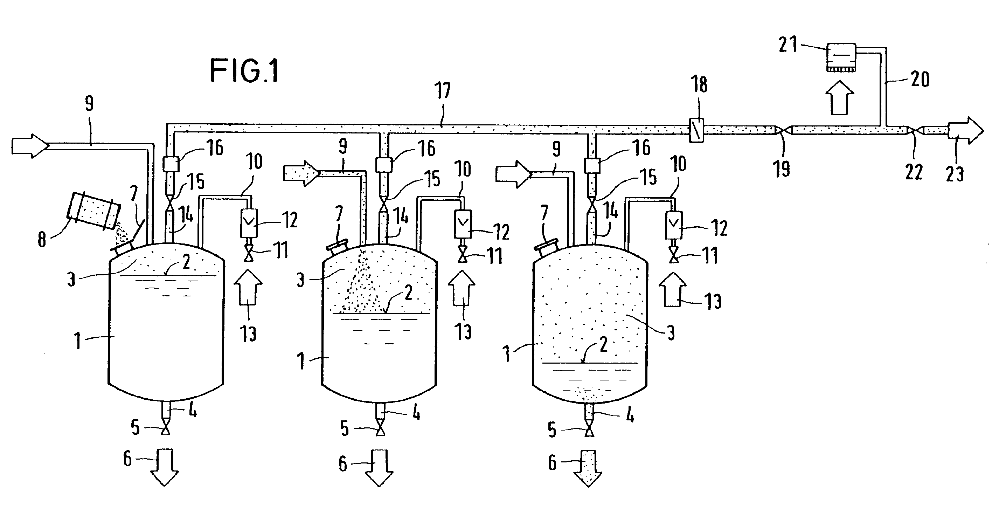

Die Funktionsweise der in Fig. 1 dargestellten Anlage ist die folgende:

Den Klebstoffbehältern 1 wird über die Inertgaszuführleitungen 10 jeweils ein konstanter Inertgasvolumenstrom, z. B. 0,5 bis 1,0 m³/h zugeführt, um eine sauerstroffreie Abdeckung der Gasräume 3 der Behälter 1 sicherzustellen. Im ungestörten Betrieb, d. h. ohne Befüll- oder Entleervorgänge der Behälter 1, tritt der jeweils zugeführte Inertgasvolumenstrom gemischt mit der sich in den Behältern 1 bildenten Abluft durch die Abluftleitungen 14 aus den Behältern 1 aus. Dabei ist durch die Flammendurchschlagsicherungen 16 in den Abluftleitungen 14 sichergestellt, daß bei einem Störfall etwa entstehende Flammen sich nicht weiter fortpflanzen können. Der Abluft-Inert-gas-Volumenstrom tritt dann aus den Abluftleitungen 14 in die zentrale Abluftsammelleitung 17 ein. Dabei können selbstverständlich auch mehr als drei Klebstoffbehälter 1 an diese Abluftsammelleitung 17 angeschlossen sein, z. B. kann die gesamte Abluft Klebstoffbetriebes in einer solchen Leitung gesammelt werden.

Die Abführung des Abluft-Inertgaz-Volumenstroms durch die Abluftsammelleitung 17 erfolgt durch die Kombination des in der Zeichnung nicht dargestellten, mit konstanter Saugleistung betriebenen Gebläses, der Falschluftansaugung durch die Falschluftleitung 20 und der Pendelrückschlagvorrichtung 18 in der Abluftsammelleitung 17. Dabei wird durch das kontinuierlich betrieben Gebläse andauernd eine Falschluftmenge angesaugt, die wenigstens zweimal größer ist als der Abluft-Inertgas-Volumenstrom. Auf diese Weise stellt sich durch entsprechende Einregulierung über das Ventil 19 und über die Gebläseleitung auf der stromabwärtigen Seite der Pendelrückschlagvorrichtung 18 ein konstanter Unterdruck von etwa 3,5 mbar ein.

Aufgrund der besonders leichtgängigen Lagerung der Klappe 26 der Pendelrückschlagvorrichtung 18 in den Lagerspitzen 34 und des justierbaren Gegengewichtes 36 kann die Pendelrückschlagvorrichtung 18 auf geringste Druckschwankungen reagieren, die von üblichen Druckregeleinrichtungen nicht erfaßt werden können. Die Pendelrückschlagvorrichtung 18 ist über das justierbare Gegengewicht 36 derart einreguliert, daß in den Gasräumen 3 der Klebstoffbehälter 1 ein konstanter Überdruck von 0,1 bis 0,2 mbar gegenüber der Umgebung herrscht. Diese minimale Druckdifferenz an der Pendelrückschlagvorrichtung 18 reicht aus, damit die Kappe 26 der Pendelrückschlagvorrichtung 18 in einer bestimmten Stellung ausgelenkt wird, in der der gewünschte Abluft-Inertgas-Volumenstrom die klappe 26 passieren kann. So ist bei der in Fig. 1 dargestellten Anlage die Pendelrückschlagvorrichtung 18 so justiert, daß im ungestörten Betrieb ein konstanter Volumenstrom von 7m³/h aus den Klebstoffbehältern 1 abgesaugt werden kann. Dabei reicht der geringe Überdruck. von 0,1 bis 0,2 mbar in den Klebstoffbehältern aus, um beim Öffnen der Klebstoffbehälter 1 einerseits ein Ansaugen von Luft aus der Umgebung und andererseits eine Abgabe von Abluft an die Umgebung zu vermeiden.

Treten nun Störvorgänge auf, wie in der Fig. 1 dargestellt, z. B. Befüllen des Kebstoffbehälters 1 mit Feststoff mittels Befüllbehälter 8 bzw. Befüllen mit einem flüssigen Stoff über die Zuführleitung 9 oder auch Entleeren des Behälters 1 über den Austritt 4, so resultieren Druckerhöhungen bzw. Druckerniedrigungen in den Klebstoffbehältern 1, die zu einer Gegährdung der Sicherheit der Anlage führen können. Diese minimalen Druckänderungen werden aber innerhalb von Sekundenbruchteilen durch die Pendelrückschlagvorrichtung 19 ausgeglichen. Sinkt beispielsweise der Druck. in den Klebstoffbehältern 1 durch Entleerung über den Austritt 4, so schließt die Klappe 26 der Pendelrückschlagvorrichtung 18 sofort und der Druck wird durch das kontinuierlich zugeführte Inertgas sofort wieder aufgebaut. Nimmt dagegen der Druck in den Behältern 1 durch Befüllvorgänge zu, wodurch sich der Abluft-Inertgas-Volumenstrom um bis zu 10m³/h erhöhen kann, so wird dieser größere Volumenstrom von der Pendelrückschlagvorrichtung 18 durchgelassen, so daß sich die minimale Druckerhöhung in den Behältern 1 abbaut. Dieser in Sekundenbruchteilen ablaufende Druckabbau erfolgt durch Pulsationsvorgänge der Klappe 26 der Pendelrückschlagvorrichtung 18, wobei diese Vorgänge nur sei der erfindungsgemäß ausgestalteten Pendelrückschlagvorrichtung 18 ablaufen und mit herkömmlichen Pendelrückschlagvorrichtungen nicht erreichbar sind. Derartige Pendelrückschlagvorrichtungen sprechen zudem auf solch geringe Druckschwankungen nicht an.

Natürlich ist die Erfindung nicht auf die in der Zeichnung dargestellten Ausführungsbeispiele beschränkt. Weitere Ausgestaltungen der Erfindung sind möglich, ohne den Grundgedanken zu verlassen. So eignet sich die erfindungsgemäße Abluftentsorgungsanlage nicht nur zur Abluftentsorgung für Klebstoffanlagen, sondern auch für andere Anlagen, die mit einer Inertisierung betrieben werden müssen, oder auch für Anlagen, bei denen Vorschriften für einen maximal zulässigen Schadstoffaustritt am Arbeitsplatz einzuhalten sind.

**Patentansprüche**

1. Abluftentsorgungsanlage für Klebstoffanlagen mit mehreren Klebstoffproduktionsbehältern (1), deren Gasräume (3) kontinuierlich mit einem Inertgas beaufschlagt sind,
dadurch gekennzeichnet,
daß zur Abführung des Abluft-Inertgas-Volumenstroms aus den Gasräumen (3) aller Klebstoffbehälter (1) in eine Abluft-Aufarbeitung eine Abluft-Sammelleitung (17) mit Druckregeleinrichtung (18) vorgesehen ist, wobei jenseits der Druckregeleinrichtung (18) eine in die Abluftsammelleitung (17) mündende Falschluftleitung (20) zur Ansaugung eines Falschluft-Volumenstroms angeschlossen und jenseits der Einmündung der Falschluftleitung (20) ein Gebläse (Pfeil 23) in der Abluft-Sammelleitung (17) angeordnet ist, wobei die Druckregeleinrichtung als Pendelrückschlagvorrichtung (18) ausgebildet ist, bei welcher in einem ringförmigen Gehäuse (24) mittels an diesem befestigter Lagerspitzen (34) exzentrisch oberhalb der Mittelachse eine Klappe (26) drehbar gelagert ist, wobei die Lagerspitzen (34) in entsprechend konische Rohrungen (29) am Umfangsrand (28) der Klappe (26) eingreifen und entsprechend der exzentrischen Anordnung der Drehachse (30) der Klappe (26) versetzt ausgebildete ringsegmentförmige Anschläge (37,38) zur Öffnung der Klappe (26) nur in einer Richtung in entsprechenden beidseitigen Eindrehungen (25) des ringförmigen Gehäuses (24) angeordnet sind und wobei unterhalb der Drehachse (30) an der Klappe (26) ein justierbares Gegengewicht (36) vorgesehen ist.

2. Anlage nach Anspruch 1,
dadurch gekennzeichnet,
daß die Abluft-Aufarbeitung zur Verbrennung des AbluftInertgasstroms als Thermoreaktor ausgebildet ist.

3. Verwendung der Anlage nach Anspruch 1 oder 2 zur Abluftentsorgung von Klebstoffbehältern,
dadurch gekennzeichnet,
daß mittels der Pendelrückschlagvorrichtung (18) in den Gasräumen (3) der Klebstoffbehälter (1) ein weitgehend konstanter Überdruck von 0,1 bis 0,2 mbar eingestellt wird, während mittels des gegenüber dem Abluft-Inertgas-Volumenstrom wesentlich größeren Falschluft-Volumenstroms und des Gebläses (Pfeil 23) ein konstanter Unterdruck von 3 bis 4 mbar in der Abluftsammelleitung (17) jenseits der Pendelrückschlagvorrichtung (18) erzeugt wird.

4. Verwendung nach Anspruch 3,
dadurch gekennzeichnet,
daß in den Gasräumen (3) der Klebstoffbehälter (1) ein weitgehend konstanter Überdruck von 0,1 mbar und im Bereich der Abluftsammelleitung (17) jenseits der Pendelrückschlagvorrichtung (18) ein Unterdruck von 3,5 mbar eingestellt wird.

5. Verwendung nach Anspruch 3 oder 4,
dadurch gekennzeichnet,
daß der Abluft-Inertgas-Volumenstrom durch die Pendelrückschlagvorrichtung (18), der durch die kontinuierliche Inertgaszufuhr in die Klebstoffbehälter (1) und die verdampfte Abgasmenge entsteht, im Bereich von 5 bis 10, insbesondere 7 m³/h liegt.

6. Verwendung nach Anspruch 3 oder einem folgenden,
dadurch gekennzeichnet,
daß der durch Befüllvorgänge der Klebstoffbehälter (1) verursachte zusätzliche Abluft-Inertgas-Volumenstrom bis zu 10 m³/h beträgt.

7. Verwendung nach Anspruch 3 oder einem der folgenden,
dadurch gekennzeichnet,
daß der Falschluft-Volumenstrom wenigstens zweimal größer als der Abluft-Inertgas-Volumenstrom ist.

8. Verwendung nach Anspruch 3 oder einem der folgenden,
dadurch gekennzeichnet,
daß als Inertaas Stickstoff gewählt wird.

**Claims**

1. A waste air disposal arrangement for adhesive plants comprising several adhesive production containers of which the gas spaces are continuously purged with an inert gas,

characterized in that

a waste air manifold (17) with a pressure controller (18) is provided for discharging the waste air/inert gas volume stream from the gas spaces (3) of all the adhesive containers (1) into a waste air processor, a secondary air pipe (20) opening into the waste air manifold (17) being connected to the other side of the pressure controller (18) for taking in a volume stream of secondary air and a fan (arrow 23) being arranged in the waste air manifold (17) beyond the opening of the secondary air pipe (20), the pressure controller being in the form of a pendulum-type non-return valve (18) in which a flap (26) is mounted for rotation - eccentrically above the centre axis - in an annular housing (24) by means of pivot points (24) fixed thereto, the pivot points (34) engaging in corresponding conical bores (29) in the periphery (28) of the flap (26) and ring-segment-like stops (37,38) for opening the flap (26), which are offset in accordance with the eccentric arrangement of the axis of rotation (30) of the flap (26), being arranged in only one direction in corresponding recesses (25) on both sides of the annular housing (24) and an adjustable counterweight (36) being provided on the flap (26) beneath the axis of rotation (30).

2. An arrangement as claimed in claim 1,

characterized in that

the waste air processor is in the form of a thermoreactor for burning the waste air/inert gas stream.

3. The use of the arrangement claimed in claim 1 or 2 for removing waste air from adhesive containers,

characterized in that

a substantially constant excess pressure of 0.1 to 0.2 mbar is established in the gas spaces (3) of the adhesive container (1) by means of the pendulum-type non-return valve (18) while a constant reduced pressure of 3 to 4 mbar is established in the waste air mainfold (17) beyond the pendulum-type non-return valve (18) by means of the considerably greater secondary air volume stream - compared with the waste air/inert gas volume stream - and the fan (arrow 23).

4. The use claimed in claim 3,

characterized in that

a substantially constant excess pressure of 0.1 mbar is established in the gas spaces (3) of the adhesive containers (1) while a reduced pressure of 3.5 mbar is established in the waste air manifold (17) beyond the pendulum-type non-return valve (18).

5. The use claimed in claim 3 or 4,

characterized in that

the waste air/inert gas volume stream through the pendulum-type non-return valve (18), which is formed by the continuous supply of inert gas into the adhesive containers (1) and the quantity of waste air evaporated, is in the range from 5 to 10 and, more particularly, 7 $m^3$/h.

6. The use claimed in claim 3 or any of the following claims,

characterized in that

the additional waste air/inert gas volume stream cased by filling of the adhesive containers (1) is up to 10 $m^3$/h.

7. The use claimed in claim 3 or any of the following claims,

characterized in that

the secondary air volume stream is at least twice the waste air/inert gas volume stream.

8. The use claimed in claim 3 or any of the following claims,

characterized in that

nitrogen is used as the inert gas.

## Revendications

1. Unité de ventilation pour unités de colle avec plusieurs cuves (1) de production de cotte, dont les espaces vides (3) sont en permanence remplis de gaz inerte,

caractérisée en ce qu'on

prévoit pour éliminer le courant volumique de gaz inerte et de gaz résiduaires des espaces vides (3) de toutes les cuves de colle (1), une conduite collectrice (17) de gaz résiduaires les dirigeant vers une unité de retraitement de gaz résiduaire avec un dispositif de régulation de pression (18), en ayant raccordé de l'autre côté du dispositif de régulation de pression (18) une conduite d'entrée d'air (20) débouchant dans la conduite collectrice de gaz résiduaires (17) pour aspirer un débit volumique de rentrée d'air et au-delà du débouché de la conduite de rentrée d'air (20) un ventilateur (flèche 23) sur la conduite collectrice (17) de gaz résiduaires, te dispositif de régulation de pression étant exécuté sous la forme d'un clapet de non retour oscillant (18) dans lequel un volet (26) est logé en rotation dans un corps (24) annulaire au moyen de pointes de pivot (34) fixées sur lui, de façon excentrée au-dessus de l'axe médian, les pointes de pivot (34) venant en prise dans des tubes (29) coniques correspondants sur le bord périphérique (28) du volet (26) et en correspondance à l'implantation excentrée de l'axe de rotation (30) du volet (26), des butées (37, 38) étant placées décalées en forme de serpent d'anneau pour ne permettre l'ouverture du volet (26) que dans un sens dans les gorges (25) correspondantes de chaque côté du corps annulaire (24) et en prévoyant en-dessous de l'axe de rotation (30) sur le volet (26) un contre-poids réglable (36).

2. Dispositif selon la revendication 1,
caractérisé en ce que
le retraitement des gaz résiduaires est exécuté sous forme de thermoréacteur pour la combustion du courant de gaz inerte et de gaz résiduaires.

3. Utilisation de l'unité selon la revendication 1 ou 2 pour prélever les gaz résiduaires des cuves de colle, caractérisée en ce qu'au
moyen du clapet de non retour oscillant (18) on maintient en permanence dans les espaces vides (3) des cuves de colle (1) une surpression largement constante de 0,1 à 0,2 mbar, tandis qu'au moyen du débit volumique de rentrée d'air nettement plus important que le courant volumique de gaz inerte et de gaz résiduaire et grâce au ventilateur (flèche 23) on produit une dépression constante de 3 à 4 mbar dans la conduite collectrice (17) de gaz résiduaires de l'autre côté du dispositif de clapet de non retour (18) oscillant.

4. Utilisation selon la revendication 3,
caractérisée en ce que
dans l'espace vide (3) des cuves de colle (1) on établit une surpression largement constante de 0,1 mbar et dans le domaine de la conduite collectrice de gaz résiduaires (17) au-delà du dispositif de clapet de non retour oscillant (18) une dépression de 3,5 mbar.

5. Utilisation selon la revendication 3 ou 4,
caractérisée en ce que
le courant volumique de gaz inerte et de gaz résiduaires se trouve réglé dans l'intervalle de 5 à 10, notamment 7 m³/h via le dispositif de clapet de non retour (18) oscillant, qui se forme grâce à l'introduction en continu de gaz inerte dans les cuves de colle (1) et aux quantités de gaz residuaires vaporisées.

6. Utilisation selon la revendication 3 ou l'une des suivantes,
caractérisée en ce que
le courant volumique supplémentaire de gaz inerte-gaz résiduaires dû au processus de remplissage des cuves de colle (1) se monte jusqu'à 10 m³/h.

7. Utilisation selon la revendication 3 ou l'une des suivantes,
caractérisée en ce que
le courant volumique de rentrée d'air est au moins deux fois plus important que le courant volumique de gaz inerte et de gaz résiduaires.

8. Utilisation selon la revendication 3 ou l'une des suivantes,
caractérisée en ce qu'on
choisit l'azote comme gaz inerte.

FIG.1

EP 0 389 505 B1

FIG.2

FIG.3

28  25

38

32

29

30

31

31

35  34  33

26

36

27

24

37

39

37

28

28

24

18

18

EP 0 389 505 B1